**Europäisches Patentamt**

**European Patent Office**

**Office européen des brevets**

(19)

(11) Veröffentlichungsnummer: **0 270 484**
**B1**

(12) **EUROPÄISCHE PATENTSCHRIFT**

(45) Veröffentlichungstag der Patentschrift:
07.03.90

(51) Int. Cl.⁴: **F16C 7/00**

(21) Anmeldenummer: **87730161.4**

(22) Anmeldetag: **02.12.87**

(54) **Faserverstärkte Druck- oder Zugstange.**

(30) Priorität: **04.12.86 DE 3641632**
**30.03.87 DE 3710493**

(43) Veröffentlichungstag der Anmeldung:
**08.06.88 Patentblatt 88/23**

(45) Bekanntmachung des Hinweises auf die Patenterteilung:
**07.03.90 Patentblatt 90/10**

(84) Benannte Vertragsstaaten:
**AT BE CH DE FR GB IT LI LU NL SE**

(56) Entgegenhaltungen:
**EP-A- 0 028 978**
**EP-A- 0 087 384**
**EP-A- 0 115 763**
**DE-A- 2 950 581**
**FR-A- 1 197 234**
**FR-A- 2 343 918**
**GB-A- 2 051 303**
**US-A- 3 638 979**
**US-A- 4 319 076**

(73) Patentinhaber: **Siemens Aktiengesellschaft,**
**Wittelsbacherplatz 2, D-8000 München 2(DE)**

(72) Erfinder: **Christopher, Hans-Günther, Ing. grad.,**
**Brandenburgische Strasse 3, D-1000 Berlin 41(DE)**
Erfinder: **Noack, Dieter, Ing. grad., Berner Strasse 13-14,**
**D-1000 Berlin 45(DE)**
Erfinder: **Schultz, Thomas, Ing. grad., Berliner**
**Strasse 21, D-1000 Berlin 37(DE)**
Erfinder: **Thürck, Joachim, Ing. grad.,**
**Schuckertdamm 324, D-1000 Berlin 13(DE)**

**Beschreibung**

Die Erfindung bezieht sich auf eine Druck- oder Zugstange, insbesondere Schalt- oder Kuppelstange eines elektrischen Hochspannungs-Leistungsschalters, aus faserverstärktem Isolierstoff mit stirnseitigen metallischen Armaturkörpern zur Druck- oder Zugkraftübertragung, bei welcher der faserverstärkte Isolierstoff achsparallel orientierte Fäden enthält, die zwischen den Armaturkörpern angeordnet und in transversal zur Stangenachse verlaufenden Ausnehmungen der Armaturkörper formschlüssig durch Zugkräfte aufnehmende Bindorgane festgelegt und mit einem aushärtbaren Kunststoffmaterial getränkt und ausgehärtet sind, und bei der die Armaturkörper ein Innengewinde aufweisen, in das ein Anschlußelement mit Außengewinde eingeschraubt ist, das zumindest eine Anschlußöffnung aufweist.

Derartige Druck- oder Zugstangen sind aus der EP-A2-0 115 763 bekannt. Bei diesen bekannten Stangen besteht das zur Krafteinleitung dienende Anschlußelement aus einem einfachen Gewindebolzen mit einer Anschlußöffnung, der in das Innengewinde des Armaturkörpers eingeschraubt und in seiner Höhe durch eine an der Stirnseite des Armaturkörpers anliegende Mutter eingestellt wird. Die Stange selbst besteht aus einem Kern aus Hartschaum, auf dem mehrere Lagen aus achsparallen oder zur Achse geneigt verlaufenden isolierenden Fasern hoher Zugfestigkeit aufgebracht sind, die mit Kunstharz imprägniert und ausgehärtet sind. Diese Fasern bestehen wenigstens aus einer Lage von achsparallelen Fäden, die vor ihrer Aushärtung in geeigneter Weise an der Außenfläche des metallischen Armaturkörpers festgelegt sind, z. B. durch Einschnüren in Ringnuten, die sich auf der Außenfläche des Armaturkörpers befinden. Die gegebene Höheneinstellbarkeit der Anschlußöffnung, erzielt durch unterschiedlich tiefes Einschrauben des Anschlußelementes in den Armaturkörper, ist aber verhältnismäßig unstabil, da die einmal gewählte Lage lediglich durch eine Mutter gesichert ist, die sich während der wechselnden Kraftübertragungen lockern kann und außerdem zusätzliche Baulänge erfordert.

Es ist weiterhin durch die EP-A1-0 087 384 bekannt, zur Herstellung einer derartigen, insbesondere hohlzylindrischen, Druck- oder Zugstange im wesentlichen parallel zur Stangenachse orientierte Fäden und konische Armaturkörper zu verwenden, die schraubenförmige äußere Ausnehmungen aufweisen, in welche die Fäden formschlüssig festgelegt werden. Die Fäden werden dabei lagenweise hin- und hergeführt und jeweils in den Ausnehmungen festgelegt, wozu ein Draht, eine Litze oder ein anderes flexibles, Zugkräfte aufnehmendes Bindeorgan, das schraubenförmig in die Ausnehmungen eingelegt wird, dient. Danach wird die Druck-oder Zugstange mit einem aushärtbaren Kunststoffmaterial getränkt und anschließend wird eine Aushärtung vorgenommen. Man erzielt auf diese Weise eine besonders gute Kraftübertragung zwischen der Druck- oder Zugstange und den Armaturkörpern, weil an dieser in erster Linie die Fäden teilnehmen, während der bei der Tränkung eingedrungene, for-mende und danach ausgehärtete Kunststoff daran nur mittelbar beteiligt ist.

Besonders vorteilhaft ist die Verwendung derartiger aus der EP-A1-0 087 384 bekannten Druck-oder Zugstangen aus elektrisch isolierendem Kunststoffmaterial als Kraftübertragungsorgane bei Hochspannungs-Leistungsschaltern, deren auf Hochspannungspotential liegende Schaltstellen von einem auf Erdpotential liegenden Antrieb betätigt werden, weil diese eine besonders gute Festlegung der zur Verstärkung des Isolierstoffes dienenden Fasern an den metallischen Armaturkörpern aufweisen.

Der Erfindung liegt die Aufgabe zugrunde, die zur Krafteinleitung bei derartigen Druck- oder Zugstangen dienenden Anschlußelemente so auszubilden, daß eine genau definierte Lage der Anschlußöffnung einfach eingestellt und sicher, aber dennoch lösbar, festgelegt werden kann.

Zur Lösung dieser Aufgabe ist eine Druck-oder Zugstange der eingangs beschriebenen Art gemäß der Erfindung so ausgebildet, daß das Anschlußelement aus einem Gabelteil mit Anschlußöffnungen und einem geschlitzten Rohrteil mit Außengewinde besteht, daß der mittlere Bereich des Gabelteils den Rohrteil als Stirnwand einseitig abschließt und eine mittige Bohrung aufweist, daß die Innenfläche des Rohrteils konisch geneigt, sich zur offenen Stirnseite hin erweiternd, verläuft und daß ein Spreizkörper mit entgegengesetzt geneigter Außenfläche im Innern des Rohrteils des Anschlußelementes angeordnet ist, der durch eine die Bohrung in der Stirnwand des Anschlußelementes durchsetzende mittige Schraube in diesem gehalten ist, die im Bereich des Gabelteils liegende, zugängliche Flächen zur Erzeugung einer Drehbewegung aufweist.

Dieses Anschlußelement kann zunächst in einfacher Weise der gewünschten Höhe der Anschlußöffnung entsprechend in den Armaturkörper eingeschraubt werden. Danach wird der Spreizkörper mittels seiner Befestigungsschraube, die im Gabelteil des Anschlußelementes leicht zugänglich ist und von dort aus gedreht werden kann, nach oben gezogen. Dies bewirkt ein Aufspreizen des geschlitzten und somit elastisch nachgiebigen Rohrteils des Anschlußelementes, so daß das im Gewinde vorhandene Spiel beseitigt wird, wodurch ein fester Formschluß zu dem Armaturkörper der Druck- oder Zugstange entsteht. Dieser Formschluß gewährleistet, daß sich die Höheneinstellung der Anschlußelemente auch bei vielfachen wechselnden Kraftbeanspruchungen nicht verändert. Trotzdem ist diese Festlegung jederzeit wieder leicht durch Lösen des Spreizkörpers aufheb- und veränderbar. Dazu ist, infolge der mittigen Lage der Schraube nur ein geringes Drehmoment notwendig.

Außerdem hat diese Anordnung den Vorteil, daß der Bereich, in dem die Lagesicherung erfolgt, in dem Bereich des Einschubgewindes liegt, über den die Kraft übertragen wird. Dadurch ergibt sich eine besonders kurze Baulänge.

In zweckmäßiger Weise wird der Neigungswinkel der Innenfäche des Rohrteils und entsprechend der Neigungswinkel des Spreizkörpers so gewählt, daß sich eine Selbsthemmung gegen ein Herausgleiten des Spreizkörpers ergibt.

Weiterhin ist es vorteilhaft, daß der Spreizkörper ballige Außenflächen aufweist. Dadurch ist eine in ihrer Lage definierte Berührungslinie zwischen der Außenfläche des Spreizkörpers und der konisch geneigten Innenfläche des Anschlußelementes sichergestellt.

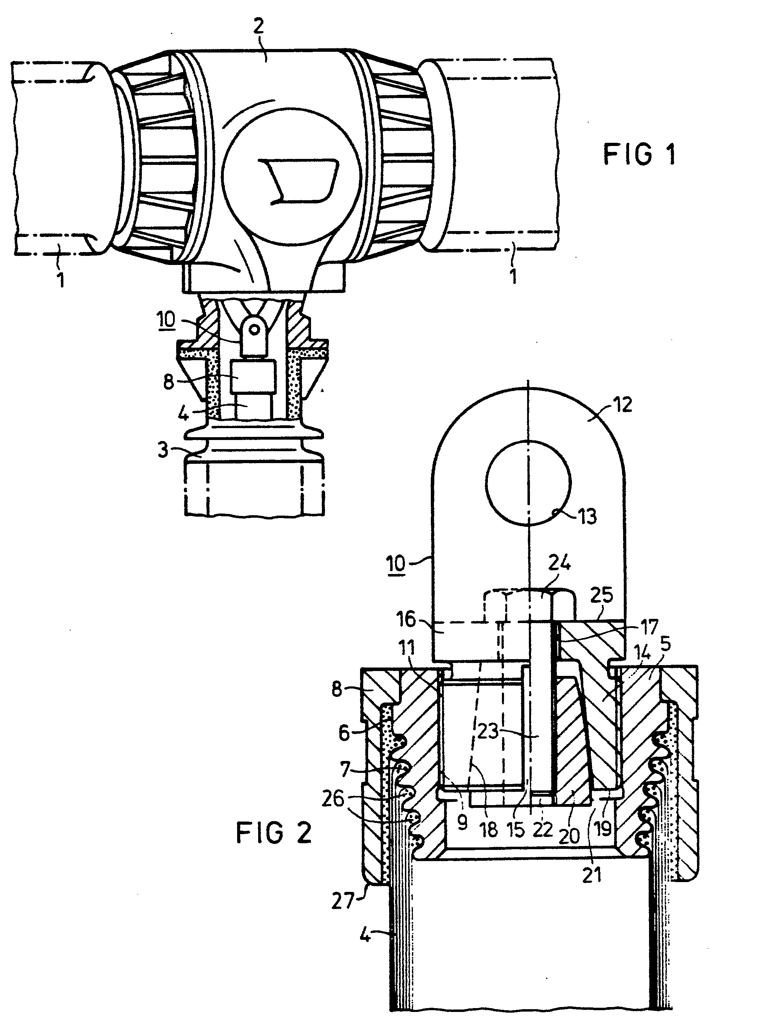

Im folgenden sei die Erfindung noch anhand eines in den Figuren 1 und 2 der Zeichnung dargestellten Ausführungsbeispiels näher erläutert. Figur 1 zeigt schematisch, teilweise geschnitten, den oberen Teil der Stützersäule eines Hochspannungs-Leistungsschalters mit dem Getriebegehäuse und den Unterbrechereinheiten. In Figur 2 ist in vergrößerten Maßstab die Verbindung der Schaltstange zum Zwischengetriebe dargestellt.

Bei einem elektrischen Hochspannungs-Leistungsschalter werden die in den Unterbrechereinheiten 1 befindlichen, nicht dargestellten Schaltkontakte über ein Zwischengetriebe 2 von der in der Stützersäule 3 angeordneten Schaltstange 4 mit Hilfe eines nicht dargestellten Antriebs bewegt. Dieser Antrieb befindet sich auf Erdpotential, während die in der Unterbrechereinheit 1 vorhandenen stromführenden Teile dagegen auf Hochspannunspotential liegen, so daß die Schaltstange 4 aus einem faserverstärkten Isolierstoff besteht.

Zur Einführung der zum Schalten des elektrischen Hochspannungs-Leistungsschalters erforderlichen Druck- oder Zugkräfte in die Schaltstange 4 und zu deren Weiterleitung ist die Schaltstange 4 an ihren Stirnseiten jeweils mit metallischen Armaturkörpern 5 versehen. Diese Armaturkörper 5 weisen auf ihrer Außenfläche 6 Ausnehmungen 7 auf, die in Umfangsrichtung verlaufen und in denen die den Isolierstoff verstärkenden Fäden vor der Aushärtung mit Hilfe von Drähten, Litzen oder anderen seilartigen flexiblen, Zugkräfte aufnehmenden Bindeorganen festgelegt sind. Es besteht somit nach der Aushärtung des zur Imprägnierung der Fasern verwendeten Kunstharzes ein enger Verbund zwischen dem Armaturkörper 5 und dem Isolierstoff der Schaltstange 4, der noch durch einen den Armaturkörper 5 von außen umgebenden Ring 8 unterstützt wird. Dieser Ring 8 besteht aus einem elektrisch leitenden Material, insbesondere aus metallischen Werkstoffen, der als elektrische Abschirmung ausgebildet ist. Er weist hierfür an seiner der Schaltstange 4 zugewandten Seite eine abgerundete Kontur auf, so daß bekannterweise Teilentladungen an Vorsprüngen und Kanten des Armaturkörpers 5 vermieden werden.

Der Armaturkörper 5 weist außerdem ein Innengewinde 9 auf, in das ein Anschlußelement 10 mit entsprechendem Außengewinde 11 eingeschraubt ist. Dieses Anschlußelement 10 besteht aus einem Gabelteil 12 mit Anschlußöffnungen 13 und einem Rohrteil 14, welches das Außengewinde 11 aufweist. Der Rohrteil 14 des Anschlußelementes 10 ist außerdem mit Schlitzen 15 versehen, durch welche er eine gewisse elastische Nachgiebigkeit erhält. Auf der einen Seite ist der Rohrteil 14 durch eine Stirnwand 16 verschlossen, die den mittleren Bereich des Gabelteils 12 bildet. Diese Stirnwand 16 weist eine mittlere Bohrung 17 auf. Die Innenfläche 18 des Rohrteils 14 verläuft derart konisch geneigt, daß sich der Innenraum des Rohrteils 14 zur offenen Stirnseite 19 hin erweitert.

Weiterhin ist ein Spreizkörper 20 mit entgegengesetzt geneigter Außenfläche 21 vorgesehen, die ballig ausgebildet ist. Dieser Spreizkörper 20 weist außerdem eine mittlere Gewindebohrung 22 auf, in welche die Schraube 23 eingeschraubt ist, welche die mittlere Bohrung 17 in der Stirnwand 16 des Anschlußelementes 10 durchsetzt und mit ihren Kopf 24 auf der Außenfläche 25 der Stirnwand 16 anliegt. Der Spreizkörper 20 wird somit durch die Schraube 23 in dem Anschlußelement 10 gehalten.

Die Lage der Anschlußöffnungen 13 gegenüber der Schaltstange 4 bzw. gegenüber anderen Schalterteilen ist dadurch einstellbar, daß das Anschlußelement 10 unterschiedlich tief in den Armaturkörper 5 eingeschraubt wird. Diese einmal erfolgte Lagejustierung wird dadurch fixiert, daß nun durch Drehung des von außen her zugänglichen, im Gabelteil 12 liegenden Kopfes 24 der Schraube 23 der Spreizkörper 20 in Richtung auf die Stirnwand 16 hin bewegt wird und somit den geschlitzten Rohrteil 14 des Anschlußelementes 10 auseinanderdrückt, so daß sich zwischen dem Armaturkörper 5 und dem Anschlußelement 10 ein fester Formschluß ergibt, der eine weitere Drehung des Anschlußelementes 10 in dem Armaturkörper 5 und somit eine Lageveränderung der Anschlußöffnungen 13 verhindert. Diese Festlegung der Lage der Anschlußöffnungen 13 kann somit durch die bei dem Betrieb des elektrischen Hochspannungs-Leistungsschalters auftretenden Kraftübertragungen in wechselnder Richtung nicht mehr beeinflußt werden.

Die einmal erfolgte Lagejustierung der Anschlußöffnungen 13 gegenüber der Schaltstange 4 wird mithin solange aufrecht erhalten bis durch eine neuerliche Betätigung der Schraube 23 der durch den Spreizkörper 20 verursachte Formschluß zwischen dem Anschlußelement 10 und dem Armaturkörper 5 wieder gelöst wird.

**Patentansprüche**

1. Druck- oder Zugstange, insbesondere Schalt- oder Kuppelstange eines elektrischen Hochspannungs-Leistungsschalters, aus faserverstärktem Isolierstoff mit stirnseitigen metallischen Armaturkörpern (5) zur Druck- oder Zugkraftübertragung, bei welcher der faserverstärkte Isolierstoff achsparallel orientierte Fäden enthält, die zwischen den Armaturkörpern (5) angeordnet und in transversal zur Stangenachse verlaufenden Ausnehmungen (7) der Armaturkörper (5) formschlüssig durch Zugkräfte aufnehmende Bindeorgane (26) festgelegt und mit einem aushärtbaren Kunststoffmaterial getränkt und ausgehärtet sind, und bei der die Armaturkörper (5) ein Innengewinde (9) aufweisen, in das ein Anschlußelement (10) mit Außengewinde (11) eingeschraubt ist, das zumindest eine Anschlußöffnung (13) aufweist, **dadurch gekennzeichnet, daß** das Anschlußelement (10) aus einem Gabelteil (12) mit Anschlußöffnungen (13) und einem geschlitzten Rohrteil (14) mit Außengewinde (11) besteht, daß der mittlere Bereich des Gabelteils (12) den Rohrteil (14) als Stirnwand (16) einseitig abschließt und eine mittige Bohrung (17) aufweist,
daß die Innenfläche (18) des Rohrteiles (14) konisch geneigt, sich zur offenen Stirnseite (19) hin erweiternd, verläuft und daß ein Spreizkörper (20) mit entgegengesetzt geneigter Außenfläche (21) im Innern des Rohrteils (14) des Anschlußelementes (10) angeordnet ist, der durch eine die Bohrung (17) in der Stirnwand (16) des Anschlußelementes (10) durchsetzende mittige Schraube (23) in diesem gehalten ist, die im Bereich des Gabelteils (12) liegende, zugängliche Flächen (24) zur Erzeugung einer Drehbewegung aufweist.

2. Rohrförmige Druck- oder Zugstange nach Anspruch 1, **dadurch gekennzeichnet,** daß der Neigungswinkel der Innenfläche (18) des Rohrteils (14) und entsprechend der Neigungswinkel des Spreizkörpers (20) eine Selbsthemmung gegen Herausgleiten des Spreizkörpers (20) ergibt.

3. Rohrförmige Druck- oder Zugstange nach Anspruch 1, **dadurch gekennzeichnet,** daß die Außenfläche (21) des Spreizkörpers (20) ballig ausgebildet ist.

4. Rohrförmige Druck- oder Zugstange nach Anspruch 1, **dadurch gekennzeichnet,** daß im Bereich der Ausnehmungen (7) ein dem Armaturkörper (5) von außen umgebender Ring (8) aus elektrisch leitenden Material angeordnet ist, der als elektrische Abschirmung ausgebildet ist.

**Revendications**

1. Tige de poussée ou de traction, notamment perche isolante ou d'accouplement d'un sectionneur électrique de puissance haute tension, en une matière isolante renforcée de fibres et ayant des armatures métalliques (5) sur les côtés frontaux, destinées à transmettre la force de poussée ou de traction, dans laquelle la matière isolante renforcée par des fibres contient des fils qui sont orientés parallèlement à l'axe et qui sont fixés en position par des organes de liaison (26) qui absorbent des forces de traction et qui sont logés dans des évidements (7) ménagés dans des corps d'armature, transversalement à l'axe de la perche (7), lesdits fils étant imprégnés avec une matière plastique durcissable et étant durcis, et dans laquelle les armatures (5) comportent un taraudage (9) dans lequel est vissé un élément de raccordement (10) muni d'un filetage (11) et comportant au moins une ouverture de raccordement, caractérisée

en ce que l'élément de raccordement (10) est constitué d'une partie en forme de fourche (12) ayant des ouvertures de raccordement (13) et d'une partie tubulaire fendue (14) et comportant un filetage extérieur (11),

en ce que la région médiane de la partie en forme de fourche (12) ferme sur un côté, en tant que paroi latérale (16), la partie tubulaire (14) et comporte un perçage central (17),

en ce que la surface intérieure (18) de la partie tubulaire (14) s'étend avec une inclinaison conique en s'évasant vers le côté frontal ouvert (19) et

en ce qu'une pièce d'expansion (20) à surface extérieure (21) inclinée en sens opposé est disposée à l'intérieur de la partie tubulaire (14) de l'élément de raccordement (10) de l'élément de raccordement (10), et y est maintenu par une vis médiane (23) traversant la paroi frontale (16) de l'élément de raccordement et comportant dans la région de la partie en forme de fourche (12) des surfaces accessibles (24) destinées à produire un mouvement de rotation.

2. Tige tubulaire de poussée ou de traction suivant la revendication 1, caractérisée en ce que l'angle d'inclinaison de la surface intérieure (18) de la partie tubulaire (14) et, d'une manière correspondante, l'angle d'inclinaison de la pièce d'expansion (20) fournissent un blocage automatique contre l'échappement de la pièce d'expansion (20).

3. Tige tubulaire de poussée ou de traction suivant la revendication 1, caractérisée en ce que la surface extérieure (21) de la pièce d'expansion (20) est bombée.

4. Tige tubulaire de poussée ou de traction suivant la revendication 1, caractérisée en ce qu'il est prévu, dans la région des évidements (7), un anneau (8) en un matériau conducteur de l'électricité, qui entoure de l'extérieur l'armature (5) et qui est constitué en blindage électrique.

**Claims**

1. Pressing or pulling rod, in particular drive or coupling rod of an electric high-voltage-circuit breaker, of fibre-reinforced insulating material with metallic end-faced fittings (5) for transferring pressure or traction forces, in which the fibre-reinforced insulating material contains threads orientated in an axially parallel manner, which are arranged between the fittings (5) and are fixed in a form-locking manner in recesses (7) of the fittings (5) extending transverse to the rod axis by binding organs (26) absorbing traction forces and are impregnated with a curable plastics material and are cured, and in which the fittings (5) have an internal thread (9) into which a connecting element (10) is screwed with the external thread (11), which has at least one connecting opening (13), characterised

in that the connecting element (10) consists of a fork part (12) with connection openings (13) and a slotted tube part (14) with an external thread (11), in that the central region of the fork part (12) seals on one side the tube part (14) as end wall (16) and has a central bore (17),

in that the inner surface (18) of the tube part (14) is conically inclined, and extends broadening towards the open end face (19) and

in that a spreader (20) with an outer surface (21) is arranged, such that it is inclined in an opposing manner, in the interior of the tube part (14) of the connecting element (10), which is held in this by a central screw (23) penetrating a bore (17) in the end wall (16) of the connecting element (10), which has accessible surfaces (24) for producing rotation lying in the region of the fork part (12).

2. Tubular pressing or pulling rod according to claim 1, characterised in that the angle of inclination of the inner surface (18) of the tube part (14) and correspondingly the angle of inclination of the spreader (20) result in self-locking of the spreader (20) against slipping out.

3. Tubular pressing or pulling rod according to claim 1, characterised in that the outer surface (21) of the spreader (20) is convex.

4. Tubular pressing or pulling rod according to claim 1, characterised in that a ring (8) of electrically conductive material, externally surrounding one of the fittings (5), is arranged in the region of the recesses (7), said ring being constructed as an electric shield.

FIG 1

FIG 2